# FASCICULE DE BREVET EUROPEEN

(11) **EP 3 495 106 B1**
(45) Date de publication et mention de la délivrance du brevet: **14.10.2020**
(21) Numéro de dépôt: 18209687.5
(22) Date de dépôt: 30.11.2018
(51) Int. Cl.: B33Y 10/00

(54) **PROCÉDÉ DE FABRICATION DE PIÈCES EN MATÉRIAU CÉRAMIQUE PAR LA TECHNIQUE DES PROCÉDÉS ADDITIFS**
VERFAHREN ZUR HERSTELLUNG VON KERAMISCHEN MATERIALTEILEN DURCH ADDITIVE FERTIGUNG
PROCESS FOR PRODUCING CERAMIC MATERIAL PARTS USING ADDITIVE PROCESSES

(30) Priorité: 11.12.2017 FR 1771338
(43) Date de publication de la demande: 12.06.2019
(73) Titulaire: S.A.S 3DCeram-Sinto, 87280 Limoges (FR)
(72) Inventeur: CHAPUT, Christophe, 87410 Le Palais sur Vienne (FR); GAIGNON, Richard, 91770 Saint-Vrain (FR)
(74) Mandataire: Cabinet Chaillot

(56) Documents cités:
- WO-A1-2016/113213
- US-A1- 2010 028 645

## Description

La présente invention concerne un procédé de fabrication de pièces en matériau céramique par la technique des procédés additifs, de telles pièces crues étant destinées à être soumises à des opérations de déliantage et frittage pour obtenir des pièces céramiques finies.

La technique des procédés additifs, également appelée stéréolithographie, comprend généralement les étapes suivantes, pour l'obtention de ces pièces crues :
- on construit, par conception assistée par ordinateur, un modèle informatique de la pièce à fabriquer, modèle dont les dimensions sont légèrement plus grandes que celles de la pièce à fabriquer afin de prévoir un retrait de la céramique au cours de la cuisson (déliantage et frittage) de la pièce ; et
- on fabrique la pièce par la technique des procédés additifs, technique selon laquelle :
   - on forme, sur une plate-forme de travail, une première couche d'une composition photodurcissable comprenant généralement au moins une matière céramique, au moins un monomère et/ou oligomère photodurcissable, au moins un photoinitiateur et le cas échéant au moins un plastifiant et/ou au moins un solvant et/ou au moins un dispersant ;
   - on fait durcir la première couche de la composition photodurcissable par irradiation (par balayage laser de la surface libre de ladite couche ou par système de projection à diodes) selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant comme pour la première couche ;
   - optionnellement, on répète les étapes ci-dessus pour obtenir la pièce à l'état cru.

Ensuite, comme indiqué ci-dessus, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

Dans ce qui suit, on décrit l'état antérieur de la technique de construction des pièces céramiques en faisant référence à des noyaux de fonderie, lesquels ne représentent qu'un exemple des pièces céramiques que l'on peut fabriquer par le procédé selon l'invention.

### Etat de la technique de construction des noyaux de fonderie

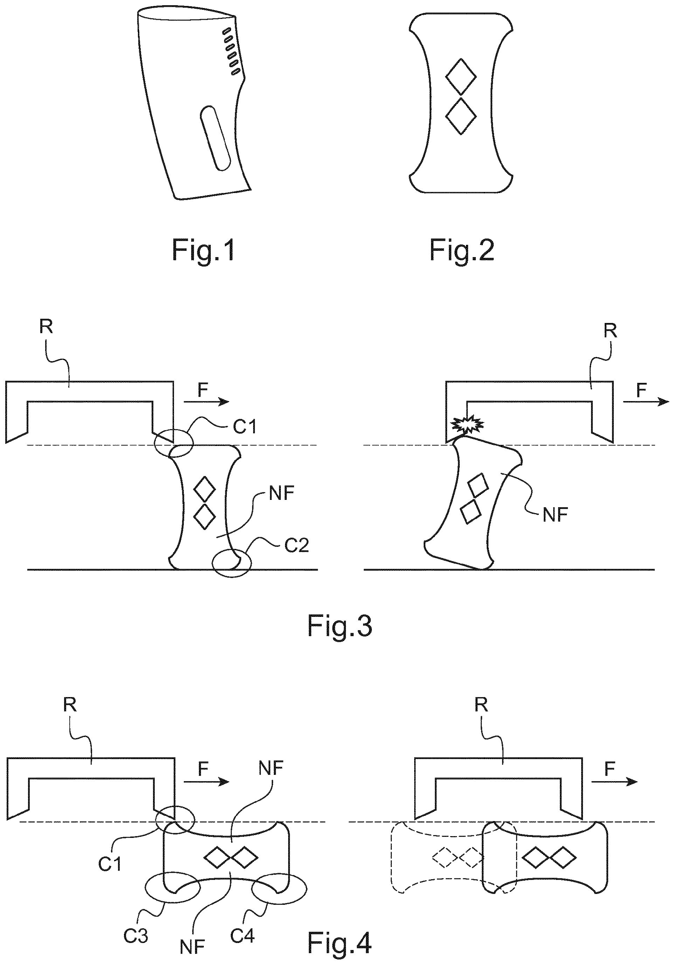

Les noyaux de fonderie peuvent être construits en étant dans la position debout sans support (1), dans la position couchée sans support (2) ou en position oblique sur support (3).
(1) La construction debout ou fabrication haute permet de construire beaucoup de noyaux de fonderie à la fois sur la plate-forme de travail de la machine de stéréolithographie. Pour stabiliser les noyaux dans leur position debout, il est nécessaire de les modifier en y attachant des renforts constitués d'étais qu'il faudra ensuite retirer après le frittage en les découpant.
   Lors de la construction debout, le noyau peut facilement se déformer/s'abîmer sous la contrainte de raclage de la pâte dans le cas du mode de fabrication par la voie pâteuse. Ce risque est accentué par le phénomène de curling suivant lequel une surface plane devient courbée sous l'effet d'une puissance laser importante provoquant une réticulation trop importante lors de la polymérisation. La pièce en construction risque de basculer lors du passage du racleur. Le phénomène de curling est illustré sur la Figure 3 du dessin annexé :
   Sur cette Figure 3, partie gauche, on a représenté de façon schématique un racleur R de la machine de stéréolithographie, lequel étale chacune des couches de matière céramique photodurcissable pâteuse, et le noyau de fonderie NF en cours de construction debout. Le sens du raclage est montré par la flèche F et la pâte étalée est symbolisée par la ligne horizontale en pointillés. L'emplacement d'application de la contrainte de raclage est entouré du cercle c1 et celui de l'apparition du phénomène de curling est entouré du cercle c2.
   Le résultat du curling illustré sur la Figure 3, partie droite, est un basculement de la pièce en construction lors du passage du racleur R.
   La construction debout, laquelle donne la possibilité de construire beaucoup de noyaux à la fois, sans nécessiter de support lors de la construction, est donc pour les raisons indiquées ci-dessus une fabrication longue et risquée.
(2) La construction couchée est par définition moins haute que la construction debout et par conséquent demandera moins de temps. Également, le nombre de renforts à ajouter sur la pièce sera moindre, voire aucun renfort ne sera nécessaire.
   Toutefois, la faible surface d'accroche du noyau de fonderie en construction avec la plate-forme de travail de la machine de stéréolithographie risque de conduire à un décrochement et à un glissement du noyau au cours de sa fabrication. C'est ce qui est illustré par la Figure 4 du dessin annexé :
   Sur cette Figure 4, partie gauche, on a représenté, comme pour la Figure 3, le noyau de fonderie NF mais cette fois en cours de construction en position couchée. Vu la faible surface d'accroché - symbolisée par les cercles c3 et c4 -, on observe - partie droite de la Figure 4 - un glissement du noyau NF par rapport à sa position initiale.
(3) Dans la construction d'un noyau en oblique sur un support, ce dernier, qui comporte une face supérieure inclinée par rapport à la plate-forme de la machine de stéréolithographie, se construit en même temps que le noyau. En raison de cette inclinaison, le support encaisse les contraintes de raclage, on n'observe ni basculement ni glissement comme dans les constructions respectivement debout et couchée, et le temps de fabrication est réduit par rapport à la construction debout.

La surface du support porte l'empreinte d'une face du noyau de fonderie, d'où il résulte qu'il y a peu de déformations lors de la fabrication et qu'il y a peu de renforts liés au noyau à rajouter.

La construction s'effectue à faible puissance laser, notamment inférieure à 150 mW, d'où il résulte une faible rigidité des pièces et pas de curling.

Lors de la conception assistée par ordinateur, pour la construction du support :
- l'une des faces du noyau est reportée sur la surface oblique du support pour créer une empreinte ;
- une opération de décalage ou opération « offset » de A µm dans les directions XYZ est effectuée sur cette surface, « A » étant par exemple de 400pm en XYZ ; et
- le noyau est alors placé à une distance en Z de B µm (B pouvant par exemple être de 135pm) plus la profondeur de polymérisation mesurée pour la pâte et les paramètres concernés. La profondeur de polymérisation est la profondeur de pâte qui va être polymérisée par un passage du laser. La profondeur de polymérisation dépend de la pâte utilisée ainsi que des paramètres laser utilisés : puissance, écart de hachure, vitesse de balayage laser. Pour fabriquer des noyaux en alumine, la profondeur de polymérisation « B » est de 125 µm environ.

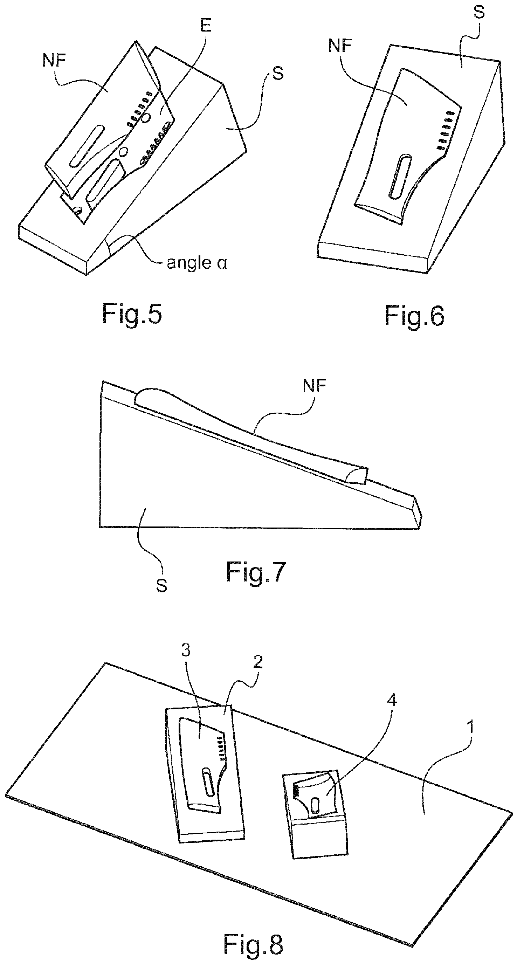

Les Figures 5 et 6 du dessin annexé illustrent la construction d'un noyau NF à l'oblique sur un support S, l'empreinte étant désignée par la lettre « E ».

L'angle α d'inclinaison du support par rapport à la plate-forme de travail est généralement compris entre 1 et 45°, plus préférablement entre 15 et 25° et idéalement de 20°.

### Etat de la technique de cuisson des noyaux de fonderie

Les noyaux de fonderie obtenus sans support selon (1) et (2) ci-dessus sont cuits dans du sable à une température généralement de l'ordre de 1300°C, lequel :
- permet l'homogénéisation de la température et l'égalisation de la pression autour du noyau, maintenant la forme de la pièce à haute température, évitant ainsi les déformations ;
- permet d'y aspirer les organiques par capillarité.

Il est cependant nécessaire que le noyau de fonderie cru soit rigide pour éviter la déformation dans le sable à température ambiante et à basse température. Or une grande rigidité à cru ne peut être obtenue qu'avec une forte puissance laser, laquelle peut provoquer le phénomène précité de « curling ».

Avec cette technique et un noyau de fonderie trop peu rigide, les écarts par rapport aux cotes sont par exemple de ±0,8 mm à 1,2 mm.

Pour la cuisson d'un noyau sur support, le noyau de fonderie cru est posé sur son empreinte, ce qui limite les déformations sur sa face inférieure car le fluage de la cuisson est contrôlé sur cette face. Cependant, la face supérieure du noyau n'est pas protégée des déformations, laquelle peut en revanche subir un fluage incontrôlé le noyau pouvant alors se courber, comme illustré sur la Figure 7 du dessin annexé. Avec cette technique, les écarts par rapport aux cotes sont par exemple de +0,4 mm à 0,6 mm.

Le document US 2010/028645 A1 représente un exemple d'un procédé selon l'art antérieur.

La présente invention a pour but de résoudre les problèmes liés aux techniques qui viennent d'être exposées afin de proposer un procédé qui permette de fabriquer des pièces céramiques, en particulier des noyaux de fonderie en céramique, respectant les cotations, tout en évitant toute déformation des pièces lors de la fabrication, du nettoyage et/ou de la cuisson.

A cet effet, selon la présente invention, il est prévu de construire le noyau sur son support et de construire en même temps, une pièce appelée conformateur, laquelle présente, dans sa face supérieure une fois construite, une empreinte de la face du noyau opposée à celle coopérant avec l'empreinte formée dans le support.

Le support, le noyau et le conformateur sont faits du même matériau.

Lors de la cuisson, le conformateur est retourné pour que le noyau puisse être posé sur lui, le support étant alors posé sur le noyau, lequel est donc serré entre le support et le conformateur. Le noyau est maintenu à la bonne forme grâce à la pression appliquée par le support et le conformateur. Les noyaux étant fabriqués sur support, ils peuvent avoir une faible rigidité, pouvant donc se déformer sans se casser. Le noyau conserve ses cotations après frittage.

La présente invention a donc pour objet un procédé de fabrication d'une pièce en matériau céramique par la technique des procédés additifs ou stéréolithographie, ladite pièce étant formée à l'état cru à partir d'une composition céramique photodurcissable comportant une poudre céramique et une partie organique apte à être détruite par chauffage lors du déliantage et incluant au moins un monomère et/ou oligomère photodurcissable et au moins un photoinitiateur, et étant soumise ensuite à des opérations de déliantage et frittage,
caractérisé par le fait que :
- sur une plate-forme de travail d'une machine de stéréolithographie, on construit, par la technique des procédés additifs simultanément mais de façon séparée, à partir d'une même composition céramique photodurcissable de consistance pâteuse :
   - un ensemble à l'état cru constitué par un support de la pièce crue et par ladite pièce crue sur ledit support, la surface libre de ce dernier portant l'empreinte d'une première face de ladite pièce crue, ladite empreinte pratiquée dans ledit support ayant une surface décalée en XYZ mais équivalente à ladite première face de ladite pièce crue pour permettre la réception de celle-ci dans ledit support et l'espacement entre les deux étant rempli par de la matière pâteuse apte à être enlevée après formation dudit ensemble à l'état cru ; et
   - un conformateur à l'état cru constitué par une pièce en céramique dont la surface libre porte l'empreinte d'une deuxième face de ladite pièce crue opposée à ladite première face, ladite empreinte pratiquée dans ledit conformateur ayant une surface décalée en XYZ mais équivalente à ladite deuxième face de ladite pièce crue pour permettre la réception de celle-ci dans ledit conformateur ;
- dans un four de cuisson, on place, sur ledit conformateur à l'état cru ainsi obtenu avec son empreinte tournée vers le haut, ledit ensemble à l'état cru ainsi obtenu avec sa pièce crue tournée vers le bas pour être reçue dans l'empreinte dudit conformateur, et on soumet la pièce à l'état cru ainsi maintenue entre le conformateur et le support à un déliantage et à un frittage, les empreintes du support et du conformateur étant telles que la pièce est complètement enfermée entre les deux lors de ces opérations de déliantage et de frittage.

La composition céramique photodurcissable est photodurcie par laser ou par une source UV.

Le matériau céramique frittable est notamment choisi parmi l'alumine (Al₂O₃), la zircone (ZrO₂), la zircone renforcée par alumine, l'alumine renforcée par zircone, le zircon (ZrSiO₄), la silice (SiO₂), l'hydroxyapatite, la zircon silice (ZrSiO₄ + SiO₂), le nitrure de silicium, le phosphate tricalcique (TCP), le nitrure d'aluminium, le carbure de silicium, la cordiérite et la mullite. Un tel matériau est résistant aux chocs thermiques.

L'empreinte du support peut avantageusement correspondre à une surface décalée de 100 à 600 µm en XYZ de ladite première face de la pièce crue. L'empreinte du conformateur peut avantageusement correspondre à une surface décalée de 20 à 80 µm en XYZ de ladite deuxième face de la pièce crue. Dans ces conditions, le conformateur a une surface plus proche de celle de la pièce. En plaçant la pièce sur le conformateur et le support par-dessus celle-ci, la pièce est comprimée sur la face du conformateur qui est plus « précise » que celle du support.

Le support, la pièce et le conformateur ont le même retrait lors de la cuisson (à une température de l'ordre de 1300°C) puisqu'ils sont faits du même matériau.

Avec le procédé selon la présente invention, l'écart par rapport aux cotes peut être réduit à + 0,2 mm.

Avantageusement, on construit la pièce crue à l'oblique sur le support, l'angle d'inclinaison du support par rapport à la plate-forme étant compris entre 1 et 45°, de préférence entre 15 et 25° et, de façon particulièrement préférée, étant de 20°.

Le support peut être formé en étant traversé par au moins un trou débouchant dans son empreinte et permettant le passage d'un solvant en vue de l'enlèvement de la matière pâteuse non durcie après formation de l'ensemble support-pièce crue. Ces trous peuvent être trous de section circulaire, par exemple d'un diamètre compris entre 2 et 8 mm, étant par exemple de 4 mm.

Avantageusement, on prévoit plusieurs trous avantageusement répartis sur tout le support.

Lors du nettoyage de la pièce à l'état cru dans son support afin de retirer la pâte comprise entre la pièce et le support, l'opérateur peut donc faire passer du solvant de nettoyage dans ces trous, la pâte à retirer commençant alors à se solubiliser partiellement, facilitant le décollement de la pièce à l'état cru.

Le support peut être formé pour comporter au moins une cavité dans sa paroi opposée à celle portant l'empreinte de la pièce crue, la ou les cavités étant susceptibles d'être remplies par un matériau de lest, tel que du sable ou des billes lorsque le support est en position de cuisson.

Ce matériau de lest permet lorsqu'il est placé dans les cavités du support lequel se trouve sur la pièce crue lors de la cuisson d'assurer une pression supplémentaire sur la pièce crue afin de contrôler le fluage de celle-ci. La forme et le nombre de cavités peuvent varier et les cavités peuvent être remplies de façon inégale si l'on souhaite contrôler le fluage sur certaines zones de la pièce crue seulement.

Dans le cas où des trous de nettoyage sont pratiqués dans le support, il va de soi que ces trous doivent être bouchés pour l'application de la pression supplémentaire ou que, si des billes sont utilisées comme matière de lest, le diamètre de celles-ci doive être supérieur à la section des trous de nettoyage.

Dans le cas où les cavités ne sont pas remplies par de la matière de lest et où des trous de nettoyage sont prévus, ceux-ci servent alors, lors de la cuisson, de cheminée pour faciliter l'évacuation des matières organiques.

Le support et la pièce crue et/ou la plate-forme et le support peuvent être reliés par des picots anti-curling formés lors de la construction dans les zones de la pièce crue enclines au curling, les picots pouvant avoir un diamètre compris entre 50 et 800 pm, de façon davantage préférée entre 300 et 400 µm. Ces picots qui empêchent le recourbement des surfaces planes sont cassés lorsque la pièce crue est détachée de son support.

Conformément à un premier mode de réalisation du procédé selon l'invention, à l'étape de construction, on forme des couches successives de composition céramique photodurcissable que l'on fait à chaque fois durcir par irradiation selon le motif préalablement défini à partir du modèle pour ladite couche, et qu'après l'étape de construction, on soumet l'ensemble à l'état cru et le conformateur à l'état cru à une étape de nettoyage pour retirer la composition photodurcissable non photodurcie, permettant notamment de détacher la pièce crue de son support.

Conformément à un second mode de réalisation du procédé selon l'invention, à l'étape de construction, on conduit les opérations suivantes pour former des parties creuses de l'ensemble à l'état cru support-pièce, en particulier pour former l'espace entre le support et la pièce et des parties creuses au sein de la pièce :
- formation par usinage d'au moins un évidement dans au moins une couche de composition céramique photodurcissable durcie à partir de la surface supérieure de celle-ci ;
- dépôt dans ledit ou lesdits évidements pour le ou les remplir d'une matière organique sacrificielle apte à être durcie et à être détruite par chauffage lors du déliantage ; et
- durcissement de la matière organique sacrificielle pour obtenir une surface horizontale dure de même niveau que la couche de composition céramique durcie avoisinante,
à chaque formation d'évidement(s), celui-ci ou ceux-ci étant délimités selon le ou les motifs préalablement définis à partir du modèle informatique, et sa ou ses profondeurs choisies pour assurer la continuité de la pièce à fabriquer, et
l'on obtient, une fois l'empilement des couches durcies réalisé, un ensemble à l'état cru support-pièce que l'on peut soumettre à un nettoyage pour enlever la ou les parties non durcies,
la pièce crue étant détachée de son support lors du déliantage.

La matière organique sacrificielle consiste avantageusement en la composition photodurcissable utilisée pour la formation de la pièce mais sans la ou les matières céramiques.

Conformément à un mode de réalisation particulier du procédé selon la présente invention, à l'étape de construction, on forme, d'une part, un empilement support/pièce crue/(support/pièce crue)ₙ, n étant un nombre entier tel que 1, 2, 3, et d'autre part un conformateur, et à l'étape de cuisson, on forme l'empilement conformateur/pièce crue/support/(pièce crue/support)ₙ, les faces opposées de chaque support destinées à coopérer avec les pièces crues portant, l'une, l'empreinte d'une face de ladite pièce crue, et, l'autre, l'empreinte de la face opposée de ladite pièce crue.

La pièce crue obtenue par le procédé selon la présente invention est par exemple un noyau de fonderie.

Pour mieux illustrer l'objet de la présente invention, on va en décrire ci-après, à titre indicatif et non limitatif, plusieurs modes de réalisation particuliers avec référence au dessin annexé.

Sur ce dessin :
- les Figures 1 et 2 sont des représentations respectivement simplifiée et schématique d'un noyau de fonderie de forme complexe et précise et de surface lisse, un tel noyau étant utilisé pour la coulée d'une aube de turbine ;
- la Figure 3 est un schéma illustrant le phénomène de curling, phénomène qui peut être observé dans la fabrication connue des noyaux debout ;
- la Figure 4 est un schéma illustrant le phénomène de décrochement et de glissement du noyau, phénomène qui peut être observé dans certains cas, par exemple lorsque l'énergie d'irradiation devient trop élevée ;
- la Figure 5 est une vue schématique en perspective éclatée d'un support à surface supérieure oblique et d'un noyau de fonderie destiné à être posé sur son empreinte formée dans la surface supérieure oblique ;
- la Figure 6 est une vue correspondant à la Figure 5 avec le noyau posé sur son support ;
- la Figure 7 montre, de profil, un support à surface oblique formant une empreinte ayant reçu le noyau de fonderie, lequel s'est recourbé lors de la cuisson à cause du fluage non contrôlé sur la face supérieure de la pièce crue ;
- la Figure 8 montre, en perspective, une plate-forme de construction d'une machine de stéréolithographie sur laquelle on a construit simultanément, conformément à l'invention, un ensemble support-pièce et un conformateur ;
- la Figure 9 est une vue en perspective éclatée montrant la pièce et le conformateur ;
- les Figures 10 et 11 sont des vues en perspective éclatée du support, de la pièce et du conformateur dans des positions inversées ;
- la Figure 12 est une vue en coupe de profil de la pièce sur son support ;
- la Figure 13 illustre le positionnement du support, de la pièce et du conformateur pour la cuisson ;
- la Figure 14 montre, dans sa partie gauche, la face arrière d'un support réalisé conformément à un mode de réalisation particulier de la présente invention, et, dans sa partie droite, en perspective éclatée, ledit support vu dans sa partie avant et la pièce ;
- la Figure 15 est une vue analogue à la partie droite de la Figure 13, avec le support de la Figure 14 ;
- la Figure 16A montre le support sensiblement tel que représenté sur la partie droite de la Figue 14 mais réalisé conformément à une variante ; et
- la Figure 16B est, à plus grande échelle, une vue du détail de la Figure 16A qui constitue la variante en question.

Si l'on se réfère à la Figure 5, on peut voir que l'on a représenté en perspective éclatée un support S et un noyau de fonderie NF. Le support S présente une surface supérieure qui est inclinée d'un angle α par rapport au plan horizontal et dans laquelle est formée une empreinte E pour la face inférieure du noyau de fonderie NF.

Pour la construction par CAO du support S, la surface inférieure du noyau de fonderie NF est reportée sur la face inclinée du support S pour créer une empreinte E ; une opération « offset » en XYZ, à savoir un décalage dans les directions X, Y, Z, de 400pm par exemple, est effectué sur cette face ; le noyau de fonderie est alors placé à une distance en Z ou écart entre le support S et la face inférieure du noyau de fonderie qui peut être de 135pm plus la profondeur de polymérisation, la profondeur de polymérisation étant la profondeur de pâte qui va être polymérisée par un passage du laser. La profondeur de polymérisation dépend de la pâte utilisée ainsi que des paramètres du laser : puissance, écart de hachure, vitesse de balayage laser. Pour fabriquer des noyaux de fonderie en alumine, la profondeur de polymérisation est généralement de 125pm ou aux environs de 125pm.

La Figure 6 montre le noyau de fonderie NF en place sur son support S.

La Figure 7 illustre que, lors de la cuisson, le noyau de fonderie NF s'est recourbé à cause du fluage non contrôlé sur sa face supérieure.

La Figure 8 montre une plate-forme de construction 1 d'une machine de stéréolithographie sur laquelle on a construit simultanément, conformément à l'invention :
- un ensemble support 2 -noyau de fonderie 3 ; et
- un conformateur 4.

Ainsi le conformateur 4 selon l'invention est construit à côté du support 2 et du noyau de fonderie 3. Il n'est utilisé qu'une fois la combinaison noyau de fonderie 3 - support 2 construite, n'ayant aucun rôle lors de la construction du noyau de fonderie 3. Il permet de manipuler et de cuire le noyau de fonderie 3 sans déformation ni casse.

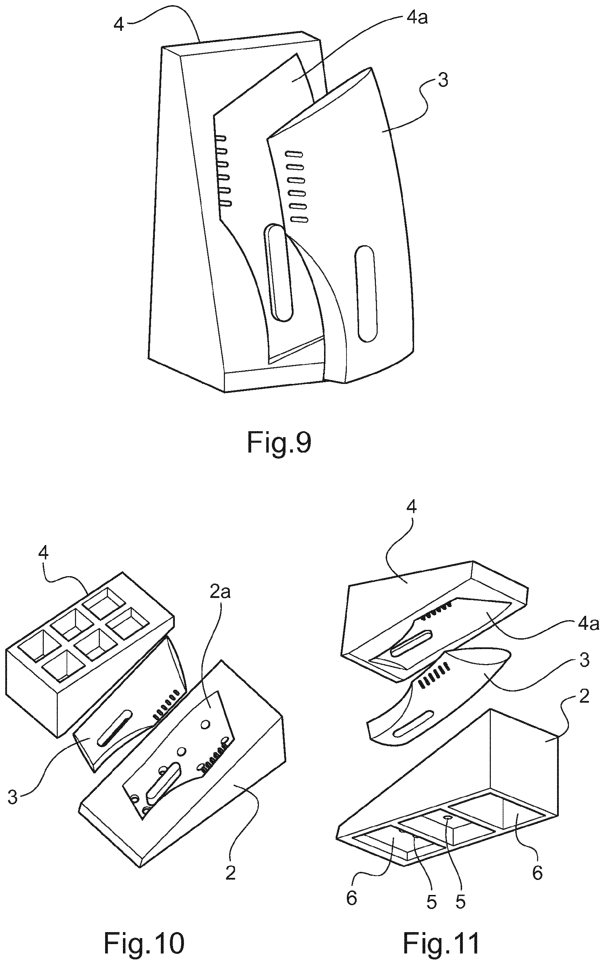

Sur la Figure 9, on peut voir le conformateur 4 qui se présente sous la même forme que le support 2 avec une face inclinée dans laquelle est formée une empreinte 4a pour la face supérieure du noyau de fonderie 3.

Pour la construction par CAO du conformateur 4, la surface supérieure du noyau de fonderie 3 est reportée sur la face inclinée du conformateur 4 pour créer l'empreinte 4a ; une opération « offset » en XYZ, à savoir un décalage dans les directions X, Y, Z, par exemple de 50pm, est effectué sur cette face, l'offset étant moins important que pour la création du support 2. Le conformateur 4 a donc une surface plus proche de la surface du noyau de fonderie 3.

Les Figures 10 et 11 montrent en perspective éclatée et dans deux orientations différentes :
- le support 2 avec son empreinte 2a (que l'on peut voir sur la Figure 10) pour la face inférieure du noyau ;
- le noyau de fonderie 3 ;
- le conformateur 4 avec son empreinte 4a (que l'on peut voir sur la Figure 11) pour la face supérieure du noyau de fonderie.

On peut voir que cette configuration selon l'invention comportant le conformateur 4 de cuisson permet que le noyau de fonderie 3 soit protégé à la fois par le support 2 et par le conformateur 4 lors du nettoyage et des manipulations, les déformations du noyau de fonderie 3 lors de ces étapes étant atténuées.

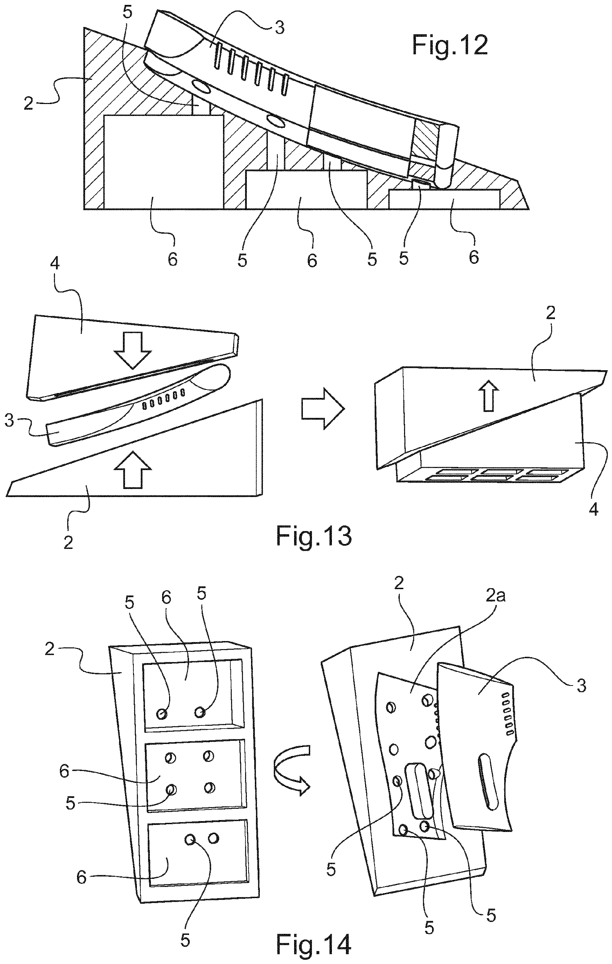

La Figure 12 montre, à plus grande échelle, une vue en coupe du noyau de fonderie 3 lors de la construction sur son support 2, l'écart entre le support 2 et la face inférieure du noyau de fonderie 3 ayant été volontairement exagéré sur cette vue. Cet écart est tel que décrit avec référence à la Figure 5.

Comme illustré sur la Figure 13, pour la cuisson, le noyau de fonderie 3 est détaché de son support 2 par déliantage et fritté serré entre le conformateur 4 et le support 2, le conformateur 4 étant en bas, le noyau de fonderie 3, posé sur ce dernier, et le support 2, posé sur le noyau de fonderie 3 comme on peut le voir sur la partie droite de la Figure 13.

Le noyau de fonderie est alors maintenu à la bonne forme grâce à la pression appliquée par le support 2 et par le conformateur 4.

En plaçant le noyau de fonderie 3 sur le conformateur 4 et le support 2 par-dessus, le noyau de fonderie 3 est comprimé sur la face du conformateur 4 qui est plus « précise » que celle du support 2.

Le noyau de fonderie 3 conserve ses proportions après frittage, car les trois pièces 2, 3 et 4 ont le même retrait, étant faites du même matériau.

Avec cette technique, l'écart par rapport aux cotes est réduit à plus ou moins 0,2mm.

Par ailleurs, avec cette technique, les pièces de faible rigidité peuvent se déformer sans se casser.

Si l'on se réfère à la Figure 14, on peut voir que le support 2 a été réalisé selon une variante qui comporte des trous 5 qui le traversent en plusieurs endroits, débouchant dans l'empreinte 2a. Le diamètre de ces trous 5 peut être compris entre 2 et 8mm, étant par exemple de 4mm.

Lors du nettoyage, l'opérateur peut faire passer du solvant de nettoyage dans ces trous 5, la pâte comprise entre le noyau de fonderie 3 et le support 2 commençant à se solubiliser partiellement, facilitant le décollement du noyau de fonderie 3.

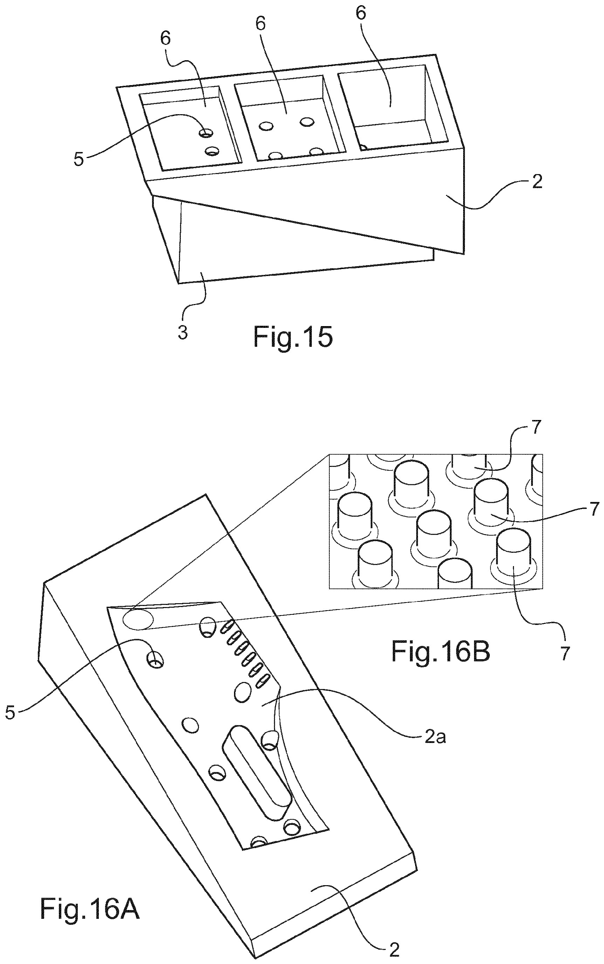

Comme on peut le voir aussi sur la Figure 14 et également sur la Figure 15, le support 2 peut être réalisé selon une autre variante qui comporte, dans sa surface qui est opposée à la surface inclinée et qui est destinée à se trouver par-dessus lors de la cuisson (Figure 15) des cavités 6, ici au nombre de trois et de forme carrée, qui sont destinées à recevoir des billes ou du sable lors de la cuisson afin d'assurer une pression supplémentaire sur le noyau de fonderie 3, et de contrôler ainsi le fluage de ce dernier pendant la cuisson.

Le support 2 représenté sur les Figures 14 et 15 comporte également des trous 5, lesquels débouchent dans le fond des cavités 6.

Les billes introduites dans les cavités 6 doivent avoir un diamètre supérieur à celui des trous 5. Si du sable ou des petites billes sont utilisés les trous 5 doivent être bouchés.

La forme et le nombre de cavités 6 peuvent varier. Les cavités 6 peuvent être remplies de manière inégale si l'on veut contrôler le fluage du noyau de fonderie 3 sur certaines zones de celui-ci seulement.

Si des trous de nettoyage 5 restent libres pendant la cuisson, ils serviront de cheminée pour faciliter l'évacuation des organiques.

Si l'on se réfère maintenant aux Figures 16A et 16B, on peut voir que l'on a représenté une variante du support 2 qui comporte, dans le fond de l'empreinte 2a, une région comportant des picots 7 anti-curling, ces picots faisant le lien entre le noyau de fonderie en construction 3 et le support 2 et étant destinés à empêcher le recourbement des surfaces planes du noyau de fonderie 3. Leur diamètre peut être compris entre 50 et 800 pm, notamment entre 300 et 400 µm. Les picots 7 sont cassés lorsque le noyau de fonderie 3 est décollé du support 2.

Sur les Figures 10 et 11 ainsi que 13 (partie de droite), on peut voir que le conformateur 4 présente dans sa base des cavités du type des cavités 6 du support 2. Ces cavités représentées dans le conformateur 4 n'ont que la fonction de limiter les épaisseurs de céramique en vue de faciliter la cuisson. Elles sont ici facultatives.

## Revendications

1. Procédé de fabrication d'une pièce en matériau céramique par la technique des procédés additifs ou stéréolithographie, ladite pièce étant formée à l'état cru à partir d'une composition céramique photodurcissable comportant une poudre céramique et une partie organique apte à être détruite par chauffage lors du déliantage et incluant au moins un monomère et/ou oligomère photodurcissable et au moins un photoinitiateur, et étant soumise ensuite à des opérations de déliantage et frittage, **caractérisé par le fait que** :
- sur une plate-forme de travail (1) d'une machine de stéréolithographie, on construit, par la technique des procédés additifs simultanément mais de façon séparée, à partir d'une même composition céramique photodurcissable de consistance pâteuse :
- un ensemble à l'état cru constitué par un support (2) de la pièce crue et par ladite pièce crue sur ledit support (2), la surface libre de ce dernier portant l'empreinte (2a) d'une première face de ladite pièce crue, ladite empreinte (2a) pratiquée dans ledit support ayant une surface décalée en XYZ mais équivalente à ladite première face de ladite pièce crue pour permettre la réception de celle-ci dans ledit support (2) et l'espacement entre les deux étant rempli par de la matière pâteuse apte à être enlevée après formation dudit ensemble à l'état cru ; et
- un conformateur (4) à l'état cru constitué par une pièce en céramique dont la surface libre porte l'empreinte (4a) d'une deuxième face de ladite pièce crue opposée à ladite première face, ladite empreinte (4a) pratiquée dans ledit conformateur (4) ayant une surface décalée en XYZ mais équivalente à ladite deuxième face de ladite pièce crue pour permettre la réception de celle-ci dans ledit conformateur (4) ;
- dans un four de cuisson, on place, sur ledit conformateur (4) à l'état cru ainsi obtenu avec son empreinte (4a) tournée vers le haut, ledit ensemble à l'état cru ainsi obtenu avec sa pièce crue tournée vers le bas pour être reçue dans l'empreinte (4a) dudit conformateur (4), et on soumet la pièce à l'état cru ainsi maintenue entre le conformateur (4) et le support (2) à un déliantage et à un frittage, les empreintes du support (2) et du conformateur (4) étant telles que la pièce est complètement enfermée entre les deux lors de ces opérations de déliantage et de frittage.

2. Procédé selon la revendication 1, **caractérisé par le fait que** l'empreinte (2a) du support (2) correspond à une surface décalée de 100 à 600 µm en XYZ de ladite première face de la pièce crue.

3. Procédé selon l'une des revendications 1 et 2, **caractérisé par le fait que** l'empreinte (4a) du conformateur (4) correspond à une surface décalée de 20 à 80 µm en XYZ de ladite deuxième face de la pièce crue.

4. Procédé selon l'une des revendications 1 à 3, **caractérisé par le fait que** l'on construit la pièce crue à l'oblique sur le support (2), l'angle d'inclinaison du support par rapport à la plate-forme (1) étant compris entre 1 et 45°, de préférence entre 15 et 25° et de façon particulièrement préférée étant de 20°.

5. Procédé selon l'une des revendications 1 à 4, **caractérisé par le fait que** le support (2) est formé en étant traversé par au moins un trou (5) débouchant dans son empreinte (2a) et permettant le passage d'un solvant en vue de l'enlèvement de la matière pâteuse non durcie après formation de l'ensemble support-pièce crue, les trous pouvant être des trous de section circulaire, ayant notamment un diamètre compris entre 2 et 8 mm.

6. Procédé selon l'une des revendications 1 à 5, **caractérisé par le fait que** le support (2) est formé pour comporter au moins une cavité (6) dans sa paroi opposée à celle portant l'empreinte (2a) de la pièce crue, la ou les cavités (6) étant susceptibles d'être remplies par un matériau de lest, tel que du sable ou des billes lorsque le support (2) est en position de cuisson.

7. Procédé selon l'une des revendications 1 à 6, **caractérisé par le fait que** le support (2) et la pièce crue et/ou la plate-forme (1) et le support (2) sont reliés par des picots (7) anti-curling formés lors de la construction dans les zones de la pièce crue enclines au curling, les picots (7) pouvant avoir un diamètre compris entre 50 et 800 pm, de façon davantage préférée entre 300 et 400 µm.

8. Procédé selon l'une des revendications 1 à 7, **caractérisé par le fait qu'**à l'étape de construction, on forme des couches successives de composition céramique photodurcissable que l'on fait à chaque fois durcir par irradiation selon le motif préalablement défini à partir du modèle pour ladite couche, et qu'après l'étape de construction, on soumet l'ensemble à l'état cru et le conformateur (4) à l'état cru à une étape de nettoyage pour retirer la composition photodurcissable non photodurcie, permettant notamment de détacher la pièce crue de son support (2).

9. Procédé selon l'une des revendications 1 à 7, **caractérisé par le fait qu'**à l'étape de construction, on conduit les opérations suivantes pour former des parties creuses de l'ensemble à l'état cru support-pièce, en particulier pour former l'espace entre le support et la pièce et des parties creuses au sein de la pièce :
- formation par usinage d'au moins un évidement dans au moins une couche de composition céramique photodurcissable durcie à partir de la surface supérieure de celle-ci ;
- dépôt dans ledit ou lesdits évidements pour le ou les remplir d'une matière organique sacrificielle apte à être durcie et à être détruite par chauffage lors du déliantage ; et
- durcissement de la matière organique sacrificielle pour obtenir une surface horizontale dure de même niveau que la couche de composition céramique durcie avoisinante,
à chaque formation d'évidement(s), celui-ci ou ceux-ci étant délimités selon le ou les motifs préalablement définis à partir du modèle informatique, et sa ou ses profondeurs choisies pour assurer la continuité de la pièce à fabriquer, et
l'on obtient, une fois l'empilement des couches durcies réalisé, un ensemble à l'état cru support-pièce que l'on peut soumettre à un nettoyage pour enlever la ou les parties non durcies,
la pièce crue étant détachée de son support lors du déliantage.

10. Procédé selon l'une des revendications 1 à 9, **caractérisé par le fait qu'**à l'étape de construction, on forme, d'une part, un empilement support/pièce crue/(support/pièce crue)ₙ, n étant un nombre entier tel que 1, 2, 3, et d'autre part un conformateur, et à l'étape de cuisson, on forme l'empilement conformateur/pièce crue/support/(pièce crue/support)ₙ, les faces opposées de chaque support destinées à coopérer avec les pièces crues portant, l'une, l'empreinte d'une face de ladite pièce crue, et, l'autre, l'empreinte de la face opposée de ladite pièce crue.

11. Procédé selon l'une des revendications 1 à 10, **caractérisé par le fait que** la pièce crue est un noyau de fonderie.

## Patentansprüche

1. Verfahren zur Herstellung eines Teils aus Keramikmaterial durch additive Fertigung oder Stereolithographie, wobei das Teil im Rohzustand aus einer photohärtbaren Keramikzusammensetzung gebildet wird, aufweisend ein Keramikpulver und einen organischen Teil, der imstande ist, beim Entbindern durch Erhitzen zerstört zu werden und mindestens ein photohärtbares Monomer und/oder Oligomer und mindestens einen Photoinitiator einschließt, und danach Entbinderungs- und Sinteroperationen unterzogen wird,
**dadurch gekennzeichnet, dass**:
- auf einer Arbeitsplattform (1) einer Stereolithographiemaschine durch additive Fertigung gleichzeitig aber separat aus derselben photohärtbaren Keramikzusammensetzung pastöser Konsistenz konstruiert wird:
- eine Einheit im Rohzustand, gebildet von einer Stütze (2) des Rohteils und von dem Rohteil auf der Stütze (2), wobei die freie Fläche derselben den Abdruck (2a) einer ersten Seite des Rohteils trägt, wobei der in der Stütze ausgearbeitete Abdruck (2a) eine in XYZ versetzte, aber zu der ersten Seite des Rohteils äquivalente Fläche hat, um die Aufnahme desselben in der Stütze (2) zu erlauben und der Zwischenraum zwischen den beiden mit pastösem Material gefüllt ist, das imstande ist, nach der Bildung der Einheit im Rohzustand entfernt zu werden, und
- ein Formgeber (4) im Rohzustand, gebildet von einem Teil aus Keramik, dessen freie Fläche den Abdruck (4a) einer zweiten, der ersten Seite gegenüberliegenden Seite des Rohteils trägt, wobei der in den Formgeber (4) eingearbeitete Abdruck (4a) eine in XYZ versetzte, aber zu der zweiten Seite des Rohteils äquivalente Fläche hat, um die Aufnahme desselben im Formgeber (4) zu erlauben;
- in einem Brennofen auf den derart erhaltenen Formgeber (4) im Rohzustand mit seinem nach oben zeigenden Abdruck (4a) die derart erhaltene Einheit im Rohzustand mit ihrem nach unten zeigenden Rohteil platziert wird, um in dem Abdruck (4a) des Formgebers (4) aufgenommen zu werden, und das somit zwischen dem Formgeber (4) und der Stütze (2) gehaltene Teil im Rohzustand einem Entbindern und einem Sintern unterzogen wird, wobei die Abdrücke der Stütze (2) und des Formgebers (4) derart sind, dass das Teil bei diesen Entbinderungs- und Sinteroperationen vollständig zwischen den beiden eingeschlossen ist.

2. Verfahren nach Anspruch 1, **dadurch gekennzeichnet, dass** der Abdruck (2a) der Stütze (2) einer von 100 bis 600 µm in XYZ von der ersten Seite des Rohteils versetzten Fläche entspricht.

3. Verfahren nach einem der Ansprüche 1 und 2, **dadurch gekennzeichnet, dass** der Abdruck (4a) des Formgebers (4) einer von 20 bis 80 µm in XYZ von der zweiten Seite des Rohteils versetzten Fläche entspricht.

4. Verfahren nach einem der Ansprüche 1 à 3, **dadurch gekennzeichnet, dass** das Rohteil schräg auf der Stütze (2) konstruiert wird, wobei der Neigungswinkel der Stütze in Bezug auf die Plattform (1) zwischen 1 und 45°, vorzugsweise zwischen 15 und 25° liegt und besonders bevorzugt 20° beträgt.

5. Verfahren nach einem der Ansprüche 1 bis 4, **dadurch gekennzeichnet, dass** die Stütze (2) von mindestens einem Loch (5) durchquert gebildet ist, welches in ihren Abdruck (2a) ausmündet und den Durchgang eines Lösungsmittels zwecks Entfernens von nicht ausgehärtetem pastösem Material nach Bildung der Einheit Stütze-Rohteil ermöglicht, wobei die Löcher Löcher mit rundem Querschnitt sein können mit insbesondere einem Durchmesser zwischen 2 und 8 mm.

6. Verfahren nach einem der Ansprüche 1 bis 5, **dadurch gekennzeichnet, dass** die Stütze (2) gebildet ist, um mindestens einen Hohlraum (6) in ihrer Wand gegenüber derjenigen aufzuweisen, die den Abdruck (2a) des Rohteils trägt, wobei der oder die Hohlräume (6) mit einem Ballastmaterial wie Sand oder Kugeln befüllbar sind, wenn die Stütze (2) in Brennposition ist.

7. Verfahren nach einem der Ansprüche 1 bis 6, **dadurch gekennzeichnet, dass** die Stütze (2) und das Rohteil und/oder die Plattform (1) und die Stütze (2) mit Anti-Curling-Zapfen (7) verbunden sind, die bei der Konstruktion in den Bereichen des Rohteils ausgebildet werden, die zu Curling neigen, wobei die Zapfen (7) einen Durchmesser haben können, der zwischen 50 und 800 µm, besonders bevorzugt zwischen 300 und 400 µm liegt.

8. Verfahren nach einem der Ansprüche 1 bis 7, **dadurch gekennzeichnet, dass** beim Konstruktionsschritt aufeinanderfolgende Schichten photohärtbarer Keramikzusammensetzung gebildet, die jedes Mal durch Bestrahlung gemäß einem zuvor anhand des Modells für die Schicht festgelegten Motiv gehärtet werden, und nach dem Konstruktionsschritt werden die Einheit im Rohzustand und der Formgeber (4) im Rohzustand einem Reinigungsschritt unterzogen, um die nicht photogehärtete photohärtbare Zusammensetzung zu entfernen, was insbesondere erlaubt, das Rohteil von dessen Stütze (2) zu lösen.

9. Verfahren nach einem der Ansprüche 1 bis 7, **dadurch gekennzeichnet, dass** beim Konstruktionsschritt die folgenden Vorgänge durchgeführt werden, um hohle Bereiche der Einheit im Rohzustand Stütze-Teil zu bilden, vor allem, um den Raum zwischen der Stütze und dem Teil und hohle Bereiche innerhalb des Teils zu bilden:
- Bilden, durch Bearbeiten, mindestens einer Aussparung in mindestens einer Schicht der gehärteten photohärtbaren Keramikzusammensetzung ab der oberen Fläche derselben;
- Aufbringen, in der oder den Aussparungen, um sie zu füllen, eines organischen Opfermaterials, das härtbar und durch Erhitzen beim Entbindern zerstörbar ist, und
- Härten des organischen Opfermaterials, um eine harte horizontale Fläche derselben Ebene wie die anliegende gehärtete Keramikzusammensetzungsschicht zu erhalten,
wobei bei jedem Bilden einer Aussparung/von Aussparungen diese gemäß dem oder den zuvor anhand des Computermodells festgelegten Motiv/en begrenzt ist/sind, und ihre Tiefe ausgewählt ist/sind, um die Kontinuität des herzustellenden Teils sicherzustellen, und
man nach dem Stapeln der gehärteten Schichten eine Einheit im Rohzustand Stütze-Teil erhält, das gereinigt werden kann, um den/die nicht gehärteten Teil/e zu entfernen,
wobei das Rohteil beim Entbindern von seiner Stütze gelöst wird.

10. Verfahren nach einem der Ansprüche 1 bis 9, **dadurch gekennzeichnet, dass** beim Konstruktionsschritt zum einen ein Stapel Stütze/Rohteil/(Stütze/Rohteil)ₙ gebildet wird, wobei n eine Ganzzahl wie 1, 2, 3 ist, und zum anderen ein Formgeber, und beim Brennschritt ein Stapel Formgeber/Rohteil/Stütze/(Rohteil/Stütze)ₙ gebildet wird, wobei von den gegenüberliegenden Seiten jeder Stütze, die zur Zusammenarbeit mit den Rohteilen bestimmt sind, die eine den Abdruck einer Seite des Rohteils und die andere den Abdruck der gegenüberliegenden Seite des Rohteils trägt.

11. Verfahren nach einem der Ansprüche 1 bis 10, **dadurch gekennzeichnet, dass** das Rohteil ein Gießkern ist.

## Claims

1. A method for manufacturing a piece made of ceramic material by the technique of additive manufacturing or stereolithography, said piece being formed in the green state from a photocurable ceramic composition comprising a ceramic powder and an organic portion able to be destroyed by heating during the debinding and including at least one photocurable monomer and/or oligomer and at least one photoinitiator, and then being subjected to debinding and sintering operations,
**characterized in that**:
- on a working platform (1) of a stereolithography machine, is manufactured, by the technique of additive manufacturing, simultaneously but separately, from a same pasty photocurable ceramic composition:
- a green assembly made up of a support (2) of the green piece and of said green piece on said support (2), the free surface of the latter bearing the imprint (2a) of a first face of said green piece, said imprint (2a) made in said support having a surface shifted in XYZ but equivalent to said first face of said green piece so as to allow it to be received in said support (2) and the spacing between both being filled with pasty material able to be removed once said green assembly is formed; and
- a green shaper (4) made up of a piece made of ceramic material the free surface of which bears the imprint (4a) of a second face of said green piece opposed to said first face, said imprint (4a) made in said shaper (4) having a surface shifted in XYZ but equivalent to said second face of said green piece so as to allow it to be received in said shaper (4);
- in an oven, is placed, on said green shaper (4) thus obtained with its imprint (4a) turned upwards, said green assembly thus obtained with its green piece turned downwards in order for it to be received in the imprint (4a) of said shaper (4), and the green piece thus held between the shaper (4) and the support (2) is subjected to debinding and to sintering, the imprints of the support (2) and of the shaper (4) being such that the piece is completely enclosed between them during the debinding and sintering operations.

2. The method according to claim 1, **characterized in that** the imprint (2a) of the support (2) corresponds to a surface shifted by 100 to 600 µm in XYZ of said first face of the green piece.

3. The method according to one of claims 1 and 2, **characterized in that** the imprint (4a) of the shaper (4) corresponds to a surface shifted by 20 to 80 µm in XYZ of said second face of the green piece.

4. The method according to one of claims 1 to 3, **characterized in that** the green piece is manufactured at an angle on the support (2), the angle of inclination of the support with respect to the platform (1) being between 1 and 45°, preferably between 15 and 25° and, particularly preferably, being 20°.

5. The method according to one of claims 1 to 4, **characterized in that** the support (2) is formed by being passed through by at least one hole (5) leading to its imprint (2a) and allowing a solvent to pass through with a view to removing the uncured pasty material after the formation of the support-green piece assembly, the holes being able to be holes with a circular cross section, especially having a diameter between 2 and 8 mm.

6. The method according to one of claims 1 to 5, **characterized in that** the support (2) is formed so as to be provided with at least one cavity (6) in its wall opposed to that bearing the imprint (2a) of the green piece, the one or more cavities (6) being likely to be filled with a ballast material, such as sand or beads, when the support (2) is in firing position.

7. The method according to one of claims 1 to 6, **characterized in that** the support (2) and the green piece and/or the platform (1) and the support (2) are linked by anti-curling studs (7) formed during the manufacturing in the areas of the green piece which are inclined to curling, the studs (7) being able to have a diameter between 50 and 800 µm, more preferably between 300 and 400 µm.

8. The method according to one of claims 1 to 7, **characterized in that**, at the manufacturing step, successive layers of photocurable ceramic composition are formed, which ones are each time caused to be cured by irradiation according to the pattern previously defined from the model for said layer, and after the manufacturing step, the green assembly and the green shaper (4) are subjected to a cleaning step so as to remove the uncured photocurable composition, especially allowing the green piece to be detached from its support (2).

9. The method according to one of claims 1 to 7, **characterized in that**, at the manufacturing step, the following steps are carried out to form hollow parts of the green support-piece assembly, in particular to form the space between the support and the piece and hollow parts within the piece:
- forming, through machining, at least one recess in at least one cured photocurable ceramic composition layer from the upper surface thereof;
- depositing in said one or more recesses to fill it/them with a sacrificial organic material able to be cured and to be destroyed by heating during the debinding; and
- curing the sacrificial organic material to obtain a hard horizontal surface at the same level as the nearby cured ceramic composition layer,
each time one or more recesses are formed, this/these one(s) being delimited according to the one or more patterns previously defined from the computer model, and its depth(s) selected to ensure the continuity of the piece to be manufactured, and
once the cured layers are stacked up, a green support-piece assembly is obtained, which one can be subjected to a cleaning operation to remove the one or more uncured parts, the green piece being detached from its support during the debinding.

10. The method according to one of claims 1 to 9, **characterized in that**, at the manufacturing step, are formed, on the one hand, a support/green piece/(support/green piece)ₙ stack, n being an integer such as 1, 2, 3, and, on the other hand, a shaper, and at the firing step, the shaper/green piece/support/(green piece/support)ₙ stack is formed, the opposite faces of each support intended to cooperate with the green pieces bearing, one, the imprint of a face of said green piece, and, the other, the imprint of the opposite face of said green piece.

11. The method according to one of claims 1 to 10, **characterized in that** the green piece is a foundry core.
